# EUROPÄISCHE PATENTSCHRIFT

(11) **EP 2 353 773 B1**
(45) Veröffentlichungstag und Bekanntmachung des Hinweises auf die Patenterteilung: **16.09.2015**
(21) Anmeldenummer: 11000321.7
(22) Anmeldetag: 17.01.2011
(51) Int. Cl.: B23P 19/06, B25B 29/02, F16B 31/04

(54) **Schraubverbindung mit einem Schraubenbolzen sowie Schraubenbolzen-Spannvorrichtung zum Spannen des Schraubenbolzens**
Screw joint with a screw bolt as well a bolt-tensioning device for tensioning the screw bolt
Joint à vis avec un boulon ainsi qu' un dispositif de mise en tension de boulons

(30) Priorität: 02.02.2010 DE 102010006562
(43) Veröffentlichungstag der Anmeldung: 10.08.2011
(60) Teilanmeldung: 15000386.1
(73) Patentinhaber: Hohmann, Jörg, 59872 Meschede (DE); Hohmann, Frank, 59581 Warstein (DE)
(72) Erfinder: Hohmann, Jörg, 59872 Meschede (DE); Hohmann, Frank, 59581 Warstein (DE)
(74) Vertreter: Paustian, Othmar

(56) Entgegenhaltungen:
- EP-A1- 0 080 743
- EP-A2- 0 797 012
- WO-A1-96/41703
- DE-A1- 10 143 406
- US-A1- 2004 165 963

## Beschreibung

Die Erfindung bezieht sich auf eine Schraubverbindung mit einem Schraubenbolzen, der durch Durchgangsbohrungen miteinander zu verspannender Maschinenteile hindurch geführt ist, gemäß dem Oberbegriff von Anspruch 1 und auf Schraubenbolzen-Spannvorrichtungen zum Spannen solcher Schraubenbolzen.

Im Rahmen dieser Anmeldung wird unter dem Ausdruck "Botzenende" das Ende des Schraubenbolzens verstanden, an dem eine Schraubenbolzen-Spannvorrichtung angreift. Das andere Ende des Schraubenbolzens wird als "Bolzenkopf" bezeichnet, auch wenn dieser Bolzenkopf ebenfalls durch eine auf ein Gewinde aufgeschraubte Mutter gebildet ist.

Auf einen Schraubenbolzen muss eine genau vorgegebene Vorspannkraft aufgebracht werden, um die auf das Bolzenende aufgeschraubte Mutter anziehen oder lösen zu können. Hierzu wird eine Wechselbuchse in der Schraubenbolzen-Spannvorrichtung auf das über die Mutter überstehende Gewindeende aufgeschraubt und danach die Schraubenbolzen-Spannvorrichtung unter hydraulischen Druck gesetzt. Wenn die vorgegebene Schraubenbolzen-Dehnung bzw. -Längung erreicht ist, wird die auf das Bolzenende aufgeschraubte Mutter zur Anlage an das Maschinenteil beigedreht.

Zur Reduzierung von Fertigungs- und Montagezeiten und des Platzbedarfs ist es gewünscht, die Anzahl der Schraubenbolzen zu reduzieren, indem größere Schraubenbolzen und/oder höherfeste Schraubenbolzen verwendet werden. Diese erfordern jedoch hohe Vorspannkräfte, für deren Einleiten in den Schraubenbolzen die Abmessungen der kraftübertragenden Teile vergrößert werden müssen, was wiederum die Reduzierung des Platzbedarfs beeinträchtigt.

Aus EP 0 797 012 A2 sind Schraubenbolzen zum Verspannen von Maschinenteilen miteinander bekannt. Die Schraubenbolzen werden durch Durchgangsbohrungen in den miteinander zu verspannenden Maschinenteilen hindurchgeführt und weisen ein Bolzenende auf, das zum Verschrauben mit einer Schraubenbolzen-Spannvorrichtung vorgesehen ist. Das Bolzenende weist ein Außengewinde und ein sich von der Stirnseite aus längs der Bolzenachse erstreckendes Innengewinde auf. Mit der Anordnung eines solchen Innengewindes kann zwar mit geringem Platzbedarf die Größe der von der Schrauben-Spannvorrichtung auf den Bolzen aufbringbaren Vorspannkraft erhöht werden, jedoch reduziert ein solches Innengewinde den Querschnitt des Bolzenendes. Solche Schraubenbolzen sind auch aus US 2004/0165963 A1 bekannt.

Aus EP 0 797 012 A2 ist ferner eine hydraulische Schraubenbolzen-Spannvorrichtung bekannt. Sie weist einen Zylinder mit einer Zylinderachse auf, der an einer ersten Stirnseite eine Stützfläche zum Abstützen auf den Maschinenteilen ausbildet. Eine Wechselbuchse, die in dem Zylinder relativ zu diesem axial verschieblich angeordnet ist, ist auf das Außengewinde des Bolzenendes aufschraubbar; eine Schraube ist in das Innengewinde des Bolzenendes einschraubbar und liegt mit ihrem Schraubenkopf auf der Wechselbuchse auf. Ein Kolben ist mit der Wechselbuchse verbunden und in dem Zylinder durch Druckmittel in die von der Stützfläche abgewandte Richtung verschiebbar, wobei der Zylinder eine Druckmittelzufuhr aufweist. Ein Druckmittelanschluss steht mit der Druckmittelzufuhr in Strömungsverbindung.

Der vorliegenden Erfindung liegt die Aufgabe zugrunde, mit möglichst geringem Aufwand hohe Vorspannkräfte auf Schraubenbolzen aufzubringen.

Erfindungsgemäß wird diese Aufgabe mit Schraubenbolzen nach den Ansprüchen 1 und 3 und Schraubenbolzen-Spannvorrichtungen nach den Ansprüchen 4 und 10 gelöst.

Durch die erfindungsgemäßen Maßnahmen kann die zur Übertragung der Vorspannkraft erforderliche über die Mutter überstehende Länge des Bolzenendes erheblich reduziert werden, womit sich sowohl die erforderliche Gesamtlänge des Schraubenbolzens wie auch die entsprechenden Abmessungen der Schraubenbolzen-Spannvorrichtung deutlich reduzieren. Da das Bolzenende mit einem Außen- und mit einem Innengewinde versehen wird und die erforderliche Gesamt-Vorspannkraft nur zu einem Teil über das Außengewinde und zum restlichen Teil über das Innengewinde aufgebracht wird, wird das Außengewinde entlastet, sodass dessen erforderliche Länge reduziert werden kann, ohne dass es abschert. Die Aufteilung der Gesamt-Vorspannkraft auf das Außen- und das Innengewinde kann variieren und wird den jeweiligen Erfordernissen angepasst.

Denkbar ist es, z. B. bei großen Schraubenbolzen-Querschnitten, dass ein Schraubenbolzen mehrere Innengewinde aufweist. Bevorzugt ist jedoch nur ein Innengewinde, das koaxial zum Außengewinde verläuft.

In einem solchen Fall ist auch daran gedacht, das Innengewinde und das Außengewinde gleichdrehend auszubilden und so aufeinander abzustimmen, dass eine Schraubenbolzen-Spannvorrichtung, in der beide Gegengewinde ausgebildet und fest, d.h. einstückig, miteinander verbunden sind, gleichzeitig mit dem Innengewinde und dem Außengewinde des Bolzenendes verschraubbar ist.

Mit einer Schraubenbolzen-Spannvorrichtung nach Anspruch 4 kann ein Schraubenbolzen, dessen Bolzenende ein Außengewinde und ein Innengewinde aufweist, auf einfache und raumsparende Weise gespannt werden. Da eine äußere Wechselbuchse für das Außengewinde des Bolzenendes und eine innere Wechselbuchse für das Innengewinde des Bolzenendes ausgebildet sind, wobei die innere Wechselbuchse gegenüber der äußeren drehbar und axial verschiebbar ist, können beide unabhängig voneinander mit dem Bolzenende verschraubt werden. Hierdurch sind auch die jeweiligen Paare aus Gewinde und Gegengewinde voneinander unabhängig und können getrennt den jeweiligen Erfordernissen optimal angepasst werden. So können die Gewinde beispielsweise auch konisch ausgeführt sein. Jede Wechselbuchse ist mittels eines eigenen Kolbens axial verschiebbar, wobei beide Kolben an eine Druckmittelquelle so angeschlossen sind, dass ein gleichzeitiges Aufbringen der jeweiligen Vorspannkraft-Anteile auf die jeweiligen Gewinde gewährleistet ist. Beispielsweise kann die Druckmittelquelle bzw. der Druckmittelanschluss als einheitlicher oder gemeinsamer Druckmittelanschluss ausgeführt sein. Mit dem Begriff "Druckmittel" sind im Rahmen dieser Anmeldung hydraulische Druckmittel gemeint. Die wirksamen Kolbenflächen des ersten und des zweiten Kolbens haben dasselbe Größenverhältnis zueinander wie die von den beiden Wechselbuchsen zu übertragenden Anteile an der Gesamt-Vorspannkraft.

Vorzugsweise ist die innere Wechselbuchse gegenüber der äußeren Wechselbuchse in die von der Stützfläche abgewandte Richtung federvorgespannt. Durch die Federvorspannung wird die nicht eingeschraubte innere Wechselbuchse immer in eine definierte Ausgangsposition gebracht.

Diese wird vorzugsweise dadurch angezeigt, dass das zweite Ende der inneren Wechselbuchse im entspannten Zustand der Feder über einen Deckel der Schraubenbolzen-Spannvorrichtung, der an der der Stützfläche gegenüberliegenden zweiten Stirnseite des Zylinders angebracht ist, um eine vorgegebene Länge übersteht, wobei der Federweg so groß ist, dass die innere Wechselbuchse um ein vorgegebenes Maß vor dem Einschrauben in das Bolzenende verschiebbar ist. Beim Einschrauben der inneren Wechselbuchse in das Innengewinde des Bolzenendes verringert sich dieser Überstand, sodass die Größe der Verringerung ein Maß für die Einschraubtiefe der inneren Wechselbuchse ist. Auf diese Weise wird eine Fehlmontage durch eine nur zum Teil eingeschraubte innere Wechselbuchse erkennbar und damit vermeidbar.

In günstiger Weiterbildung der Erfindung ist die vorgegebene Überstandslänge gleich der Summe aus dem lichten Abstand zwischen der inneren Wechselbuchse und dem Bolzenende im verschraubten Zustand der äußeren Wechselbuchse und der Mindesteinschraubtiefe der inneren Wechselbuchse in das Innengewinde des Bolzenendes. Mit dieser Maßnahme ist die korrekte Verschraubung der inneren Wechselbuchse auf einfach Weise dadurch erkennbar, dass die innere Wechselbuchse nicht aus dem Deckel hervorragt, sondern bündig zu diesem abschließt.

Eine erfindungsgemäße Schraubenbolzen-Spannvorrichtung weist vorteilhafterweise ein hydraulisches Ventil auf, das von einer ersten Ventilstellung, in der es die Versorgung der Druckmittelzufuhren mit Druckmittel sperrt, in eine zweite Ventilstellung, in der es diese Versorgung freigibt, und zurück durch ein Stellelement überführbar ist, das in vorgegebenen Positionen der inneren Wechselbuchse durch diese betätigbar ist. Hierdurch kann erreicht werden, dass Druckmittel nur zugeführt wird, d. h. die Vorspannkraft nur aufgebracht wird, wenn die innere Wechselbuchse korrekt mit dem Bolzenende verschraubt ist. Eine Beschädigung des Schraubenbolzens und/oder der Schraubenbolzen-Spannvorrichtung oder gar Personenschaden können dadurch verhindert werden.

Dabei erstreckt sich das Stellelement vorzugsweise parallel zur Stirnseite des Deckels in einem lichten Abstand zu diesem, der geringer ist als die gemäß Anspruch 7 vorgegebene Überstandslänge und mindestens so groß ist wie die vorgesehene Dehnungslänge des Schraubenbolzens, wobei das Stellelement zur inneren Wechselbuchse hin federvorgespannt ist, von der inneren Wechselbuchse entgegen der Federkraft verschiebbar ist, wenn der Überstand größer ist als der lichte Abstand, und wobei das Stellelement im verschobenen Zustand das Ventil in die erste Ventilstellung überführt und im nicht verschobenen Zustand das Ventil in die zweite Ventilstellung überführt. Diese Maßnahmen beinhalten zwei Sicherheitsaspekte. Zum einen wird gewährleistet, dass ― wie oben erläutert ― Druckmittel nur zugeführt wird, wenn die erforderliche Mindesteinschraubtiefe für die innere Wechselbuchse erreicht ist. Zum anderen wird ― wenn der lichte Abstand gleich der Soll-Dehnungslänge des Schraubenbolzens ist ― die Druckmittelversorgung wieder abgeschaltet, wenn beim Spannvorgang die vorgesehene Dehnungslänge des Schraubenbolzens überschritten wird, da dann der Überstand der inneren Wechselbuchse so groß wird, dass sie das Stellelement entgegen der Federkraft verschiebt und damit das Ventil in die erste Ventilstellung überführt.

Bei einer erfindungsgemäßen Schraubenbolzen-Spannvorrichtung gemäß den Merkmalen des Anspruchs 10 sind die äußere und die innere Wechselbuchse miteinander fest verbunden d.h. einstückig ausgeführt. In diesem Fall werden beide Gewinde gleichzeitig mit ihren entsprechenden Gegengewinden im Bolzenende verschraubt, sodass die Zahl der Arbeitsschritte reduziert ist. Bei dieser Ausführungsform müssen sämtliche Gewinde exakt aufeinander abgestimmt sein, beispielsweise bezüglich Gewindeansatz und Gewindesteigung, um ein problemloses gleichzeitiges Verschrauben beider Gewinde zu gewährleisten.

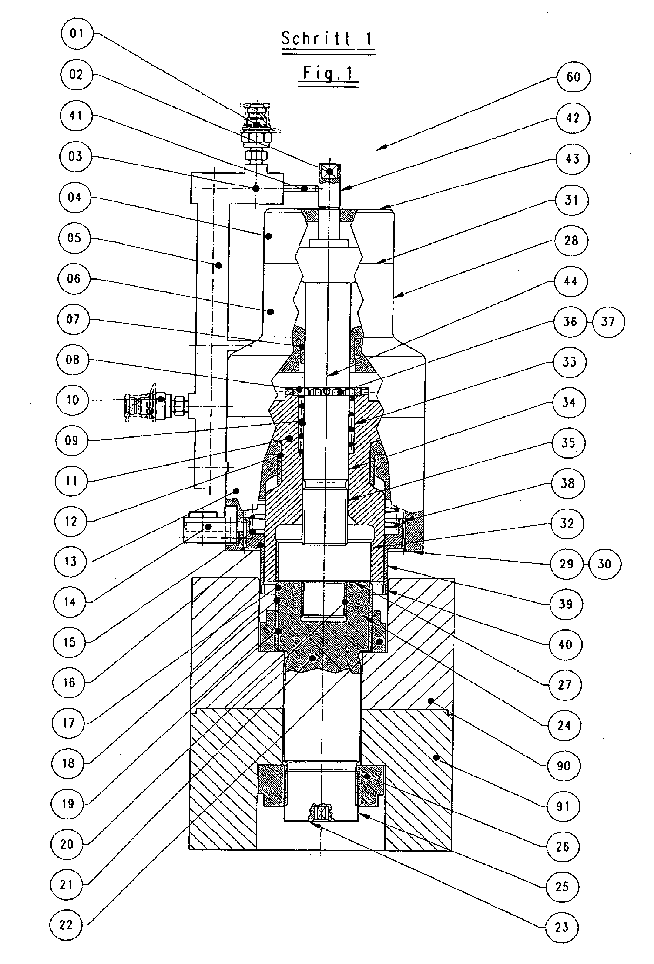

Die Erfindung wird nachfolgend anhand der Zeichnungen beispielshalber noch näher erläutert. Es zeigen
die Figuren 1 bis 5 eine teilweise aufgeschnittene Vorderansicht einer Ausführungsform eines erfindungsgemäßen Schraubenbolzens und einer erfindungsgemäßen Schraubenbolzen-Spannvorrichtung, dargestellt in fünf Schritten beim Anziehen des Schraubenbolzens.

Bei dem in den Figuren 1 bis 5 dargestellten Ausführungsbeispiel soll ein Schraubenbolzen 21 zwei Maschinenteile 90, 91 miteinander verspannen und deswegen mit einer Schraubenbolzen-Spannvorrichtung 60 gespannt werden.

Der Schraubenbolzen 21 und die Schraubenbolzen-Spannvorrichtung 60 werden zunächst anhand von Figur 1 beschrieben.

Der Schraubenbolzen 21 ist in den miteinander zu verspannenden Maschinenteilen 90, 91 sowohl mit dem Bolzenkopf 23 als auch mit dem Bolzenende 24 versenkt angeordnet. Der Bolzenkopf 23 weist ein Außengewinde 25 auf, auf das eine Mutter 26 aufgeschraubt ist. Die Mutter 26 liegt an dem in den Figuren unteren Maschinenteil 91 an.

Das Bolzenende 24 weist ein Außengewinde 18 sowie ein dazu von der Stirnseite 27, d.h. der Endfläche, aus koaxial verlaufendes Innengewinde 20 auf. Bezüglich der Ausbildung und Drehrichtung sind diese Gewinde 18, 20 im dargestellten Ausführungsbeispiel voneinander unabhängig und können den jeweiligen Anforderungen optimal angepasst werden. Die Gewinde können beispielsweise auch konisch geformt sein. Auf das Außengewinde 18 des Bolzenendes 24 ist eine Mutter 22 mit einem Muttergewinde 19 aufgeschraubt, die an dem in den Figuren oberen Maschinenteil 90 anliegt.

In den Schritten gemäß den Figuren 1 bis 3 ist auf den Schraubenbolzen 21 noch keine Vorspannkraft aufgebracht, sodass auch die Muttern 22, 26 noch ohne Pressdruck an den Maschinenteilen 90, 91 anliegen.

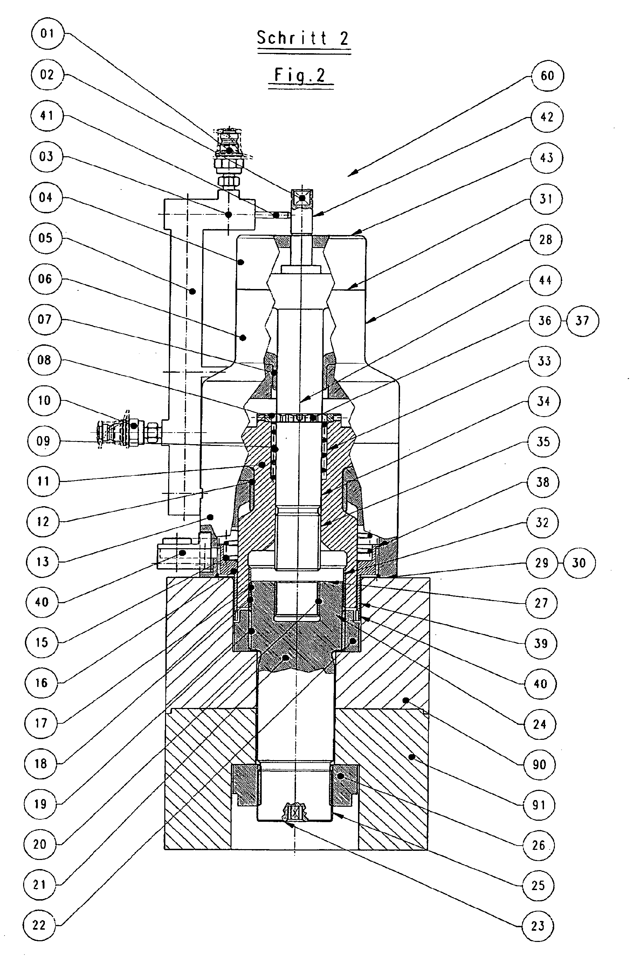

Die Schraubenbolzen-Spannvorrichtung 60 weist einen Zylinder 28 auf, der an einer ersten Stirnseite 29 eine Stützfläche 30 zum Abstützen auf einem Maschinenteil 90 aufweist und an seiner zweiten Stirnseite 31 durch einen Deckel 4 abgedeckt ist. Der Zylinder 28 ist aus einem ersten und aus einem zweiten Zylinderabschnitt 13, 6 gebildet, die längs der Zylinderachse 44 (Figur 2) hintereinander angeordnet sind.

In dem Zylinder 28 ― im Wesentlichen im ersten Zylinderabschnitt 13 ― ist eine äußere Wechselbuchse 11 angeordnet, die gegenüber dem Zylinder 28 drehbar und axial verschiebbar gelagert ist. Die äußere Wechselbuchse 11 ragt mit einem ersten Abschnitt 32 radial einwärts der ringförmigen Stützfläche 30 aus der ersten Stirnseite 29 hervor. In dem vorragenden Teil weist die äußere Wechselbuchse 11 ein Innengewinde 17 auf, das zum Verschrauben mit dem Außengewinde 18 des Bolzenendes 24 ausgelegt ist. Die äußere Wechselbuchse 11 ragt um das Maß über die Stützfläche 30 vor, das der Soll-Verschraubungshöhe entspricht, sodass bei Erreichen der Soll-Verschraubungshöhe der Zylinder 28 mit seiner Stützfläche 30 an dem Maschinenteil 90 anliegt.

Ein zweiter Abschnitt 33 der äußeren Wechselbuchse 11, der an den ersten Abschnitt 32 auf dessen der Stützfläche 30 abgewandten Seite anschließt, weist eine axiale Durchgangsbohrung 34 auf, die in den ersten Abschnitt 32 mündet.

Eine innere Wechselbuchse 2 durchläuft den Deckel 4 und den zweiten Zylinderabschnitt 6 sowie die axiale Durchgangsbohrung 34 und ragt mit ihrem ersten Ende aus der axialen Durchgangsbohrung 34 in den ersten Abschnitt 32 der äußeren Wechselbuchse 11 hinein. An diesem Ende weist die innere Wechselbuchse 2 ein Außengewinde 35 auf, das zum Verschrauben mit dem Innengewinde 20 des Bolzenendes 24 ausgelegt ist. Mit ihrem zweiten Ende ragt die innere Wechselbuchse 2 aus dem Deckel 4 hervor und bildet dort einen Überstand 42 mit einer vorgegebenen Länge.

Die innere Wechselbuchse 2 ist gegenüber der äußeren Wechselbuchse 11 und gegenüber dem zweiten Zylinderabschnitt 6 axial verschiebbar. In einer axialen Verschiebeposition ist die innere Wechselbuchse 2 mit der äußeren Wechselbuchse 11 drehfest verbunden (Figuren 1 und 2); in den übrigen Verschiebepositionen ist die innere Wechselbuchse 2 gegenüber der äußeren Wechselbuchse 11 verdrehbar (Figuren 3 bis 5).

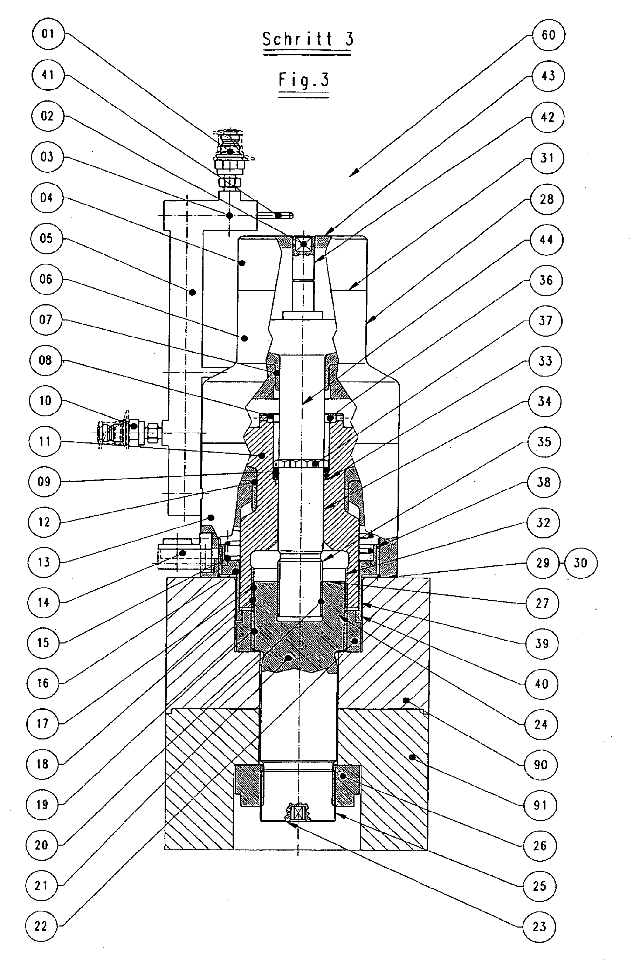

Die drehfeste Verbindung erfolgt mittels eines ringförmigen Sechskantadapters 8, der in radialer Richtung mindestens zwei Teilringe 36, 37 aufweist (Figur 3), die gegeneinander axial verschiebbar, aber nicht verdrehbar sind. Der äußere Teilring 36 ist mit der äußeren Wechselbuchse 11 fest verbunden. Der innere Teilring 37 umschließt die innere Wechselbuchse 2 und ist mit dieser fest verbunden. Er 37 weist auf seiner radialen Außenseite eine Profilierung auf, die in eine entsprechende Profilierung des äußeren Teilrings 36 eingreift, um ein Verdrehen der inneren Wechselbuchse 2 relativ zur äußeren Wechselbuchse 11 zu verhindern.

An dem inneren Teilring 37 liegt ein Ende einer Spiralfeder 9 an, die die innere Wechselbuchse 2 umschließt und diese in die von der ersten Stirnseite 29 des Zylinders 28 abgewandte Richtung, d. h. in Richtung des Deckels 4, gegenüber der äußeren Wechselbuchse 11 vorspannt. Diese Spiralfeder 9 umschließt die innere Wechselbuchse 2 auf einem Längenabschnitt und ist in einer Aussparung im zweiten Abschnitt 33 der äußeren Wechselbuchse 11 aufgenommen. Die Spiralfeder 9 liegt mit ihrem anderen Ende an dem Grund der Aussparung an.

Die beiden Teilringe 36, 37 stehen miteinander in Eingriff, wenn die Feder 9 entspannt ist, d. h. im Ausgangszustand vor dem Einschrauben der inneren Wechselbuchse 2. In dem Ausgangszustand kann somit durch Drehen der inneren Wechselbuchse 2 die äußere Wechselbuchse 11 auf das Außengewinde 18 des Bolzenendes 24 aufgeschraubt werden.

Die äußere Wechselbuchse 11 ist mit einem ersten ringförmigen Kolben 12 fest verbunden, der sie umschließt und durch ein hydraulisches Druckmittel in die von der Stützfläche 30 abgewandte Richtung axial gegenüber dem Zylinder 28 verschiebbar ist. Mit dem ersten Kolben 12 wird auch die äußere Wechselbuchse 11 verschoben. Im ersten Zylinderabschnitt 13 ist eine erste Druckmittelzufuhr für den ersten Kolben 12 ausgebildet.

Die innere Wechselbuchse 2 ist im zweiten Zylinderabschnitt 6 von einem zweiten ringförmigen Kolben 7 umschlossen und mit diesem fest verbunden. Auch dieser zweite Kolben 7 ist durch Druckmittel in die von der Stützfläche 30 abgewandte Richtung axial verschiebbar, wobei durch Verschieben des zweiten Kolbens 7 auch die innere Wechselbuchse 2 verschoben wird. In dem zweiten Zylinderabschnitt 6 ist eine zweite Druckmittelzufuhr für den zweiten Kolben 7 ausgebildet.

Dabei haben die wirksamen Kolbenflächen des ersten und des zweiten Kolbens 12, 7 dasselbe Größenverhältnis zueinander wie die von den beiden Wechselbuchsen 11, 2 zu übertragenden Anteile an der Gesamt-Vorspannkraft.

Beide Druckmittelzufuhren sind an einen gemeinsamen Druckmittelanschluss 5 angeschlossen, sodass eine Druckbeaufschlagung und damit ein Verschieben der beiden Kolben 12, 7 ausschließlich gemeinsam erfolgen kann.

Der Druckmittelanschluss 5 ist ein Druckmittelverteiler, der mit einem Anschlussnippel 10 für einen Hochdruckschlauch versehen ist.

Nahe der ersten Stirnseite 29 des Zylinders 28 ist zwischen dem ersten Zylinderabschnitt 13 und der äußeren Wechselbuchse 11 eine Drehhülse 16 angeordnet, die sowohl gegenüber dem ersten Zylinderabschnitt 13 als auch gegenüber der äußeren Wechselbuchse 11 drehbar ist. Diese Drehhülse 16 weist einen ersten Abschnitt 38 auf, der innerhalb des ersten Zylinderabschnitts 13 angeordnet ist und mit der Stützfläche 30 fluchtet.

Eine Spiralfeder 15, die die äußere Wechselbuchse 11 umschließt und mit einem Ende am ersten Zylinderabschnitt 13 und mit dem anderen Ende an ersten Abschnitt 38 der Drehhülse 16 anliegt, spannt die Drehhülse 16 in Richtung Stützfläche 30 vor, sodass auch bei einer axialen Verschiebung der äußeren Wechselbuchse 11 die Drehhülse 16 ihre Position beibehält, d. h. deren erster Abschnitt 38 mit der Stützfläche 30 fluchtet.

Ein zweiter Abschnitt 39 der Drehhülse 16 erstreckt sich vom ersten Abschnitt 38 aus längs der Außenseite des Teils der äußeren Wechselbuchse 11, der über die Stützfläche 30 vorragt, und ist mit einem dritten Abschnitt 40 verbunden.

Der dritte Abschnitt 40 ist ebenfalls ringförmig ausgebildet und mit seiner radialen Innenseite formschlüssig, d. h. drehfest, an der Mutter 22 anlegbar ist, die auf das Bolzenende 24 aufgeschraubt ist.

Der erste Abschnitt 38 der Drehhülse 16 weist eine Außenverzahnung auf, die mit Zahnrädern in einem Zahnradanschluss 14 in Eingriff steht. Durch Drehen der Drehhülse 16 mittels Zahnradantrieb wird die Mutter 22 bis zur Anlage an dem Maschinenteil 90 beigedreht, wenn die Vorspannkraft auf den Schraubenbolzen 21 aufgebracht ist und dieser sich entsprechend gedehnt und damit die Mutter 22 von der Anlage am Maschinenteil 90 abgehoben hat.

Der Druckmittelanschluss 5 bzw. -verteiler weist ein hydraulisches Sicherheitsventil 3 auf, das durch ein Stellelement 41 betätigbar ist. Das Stellelement 41 ist im dargestellten Ausführungsbeispiel als Stift ausgebildet, der in seiner Längsrichtung verschiebbar ist. Das hydraulische Ventil 3 sperrt in einer ersten Ventilstellung die Versorgung der Druckmittelzufuhren mit hydraulischem Druckmittel und gibt in einer zweiten Ventilstellung diese Versorgung frei. Durch Verschieben des Stiftes 41 wird das hydraulische Ventil 3 von der einen in die andere Ventilstellung überführt.

Der Stift 41 erstreckt sich parallel zur Stirnseite 43 des Deckels 4 bis zur inneren Wechselbuchse 2, d. h. in den Raum hinein, der auch von dem Überstand 42 eingenommen werden kann, sodass in vorgegebenen Positionen der inneren Wechselbuchse 2 durch deren Überstand 42 der Stift 41 verschoben wird. Der Stift 41 ist in Richtung der inneren Wechselbuchse 2 federvorgespannt und von dem Überstand 42 entgegen der Federkraft verschiebbar.

Im dargestellten Ausführungsbeispiel ist die Länge des Überstandes 42 im nicht eingeschraubten Zustand der inneren Wechselbuchse 2, d. h. bei entspannter Feder 9, die Summe aus der Soll-Einschraubtiefe der inneren Wechselbuchse 2 in das Innengewinde 20 des Bolzenendes 24 und dem lichten Abstand zwischen der inneren Wechselbuchse 2 und dem Bolzenende 24 bei auf das Bolzenende 24 aufgeschraubter äußerer Wechselbuchse 11.

Dabei ist der lichte Abstand mindestens so groß wie die Ringbreite des ringförmigen Sechskantadapters 8, sodass die innere Wechselbuchse 2 erst soweit axial verschoben werden kann, dass sie gegenüber der äußeren Wechselbuchse 11 frei drehbar ist.

Bei dieser Länge des Überstandes 42 liegt dessen freies Ende bündig in der Stirnfläche 43 des Deckels 4, wenn die innere Wechselbuchse 2 ihre Soll-Einschraubtiefe erreicht hat (Figur 3).

Der Stift 41 des hydraulischen Ventils 3 erstreckt sich im dargestellten Ausführungsbeispiel parallel zur Stirnfläche 43 des Deckels 4 und weist zu dieser einen lichten Abstand auf, der geringer ist, als die oben angegebene Überstandslänge und mindestens so groß ist wie die Soll-Dehnungslänge des Schraubenbolzens 21.

Wenn der lichte Abstand gleich der Soll-Dehnungslänge des Schraubenbolzens 21 ist, ist zum einen sichergestellt, dass die innere Wechselbuchse 2 bei Druckbeaufschlagung korrekt eingeschraubt ist, d. h. ihre Soll-Einschraubtiefe erreicht hat. Hierdurch ist ausgeschlossen, dass das Gewinde abreißen kann. Zum anderen ist auch sichergestellt, dass der Schraubenbolzen 21 nicht überdehnt wird, da bei Überschreiten der Soll-Dehnungslänge der Überstand 42 so weit aus dem Deckel 4 vorragt, dass er mit dem Stift 41 des hydraulischen Ventils 3 in Eingriff kommt und diesen verschiebt. Das hydraulische Ventil 3 würde dadurch in die erste Ventilstellung überführt, in der es die Versorgung der Druckmittelzufuhren sperrt.

Der Anziehvorgang eines Schraubenbolzens 21 mit Hilfe der erfindungsgemäßen Maßnahmen wird wie folgt durchgeführt:
Zunächst wird ein Schraubenbolzen 21 angefertigt, der an seinem Bolzenende 24 ein Außengewinde 18 und ein Innengewinde 20 aufweist.

Dieser Schraubenbolzen 21 wird durch die Durchgangsbohrungen in den miteinander zu verspannenden Maschinenteilen 90, 91 geführt. In dem dargestellten Ausführungsbeispiel ist der Bolzenkopf 23 ebenfalls mit einem Außengewinde 25 versehen, sodass auf den Bolzenkopf 23 und auf das Bolzenende 24 die entsprechenden Muttern 26, 22 aufgeschraubt und bis zur Anlage an den Maschinenteilen 91, 90 beigedreht werden, ohne dass auf den Schraubenbolzen 21 eine Vorspannkraft aufgebracht wird.

Wie in Figur 1 dargestellt, wird dann im ersten Schritt die Schraubenbolzen-Spannvorrichtung 60 an dem Bolzenende 24 so angesetzt, dass die äußere Wechselbuchse 11 und ― im dargestellten Fall einer versenkt angeordneten Mutter 22 ― auch die Drehhülse 16 an dem Gewindeanfang anliegt. Das heißt, die Zylinderachse 44 der Schraubenbolzen-Spannvorrichtung fluchtet mit der Schraubenbolzenachse. Der Stift 41 des hydraulischen Ventils 3 ist durch den Überstand 42 der inneren Wechselbuchse 2 verschoben und das Ventil 3 somit in der ersten Ventilstellung, in der es die Versorgung der Druckmittelzufuhren mit Druckmittel sperrt.

Im zweiten Schritt wird die äußere Wechselbuchse 11 auf das Außengewinde 18 des Bolzenendes aufgeschraubt, wobei bei Erreichen der Soll-Verschraubungshöhe die Stützfläche 30 des Zylinders 28 an dem Maschinenteil 90 und die Drehhülse 16 an der Mutter 22 anliegt (Figur 2).

Im dritten Schritt wird die innere Wechselbuchse 2 in das Innengewinde 20 des Bolzenendes 24 eingeschraubt, wobei bei Erreichen der Soll-Einschraubtiefe das freie Ende des Überstandes 42 mit der Stirnfläche 43 des Deckels 4 fluchtet (Figur 3). Der Stift 41 des hydraulischen Ventils 3 ist durch den Überstand 42 nicht mehr verschoben. Das Ventil 3 befindet sich somit in der zweiten Ventilstellung, in der es die Versorgung der Druckmittelzufuhren mit Druckmittel freigibt.

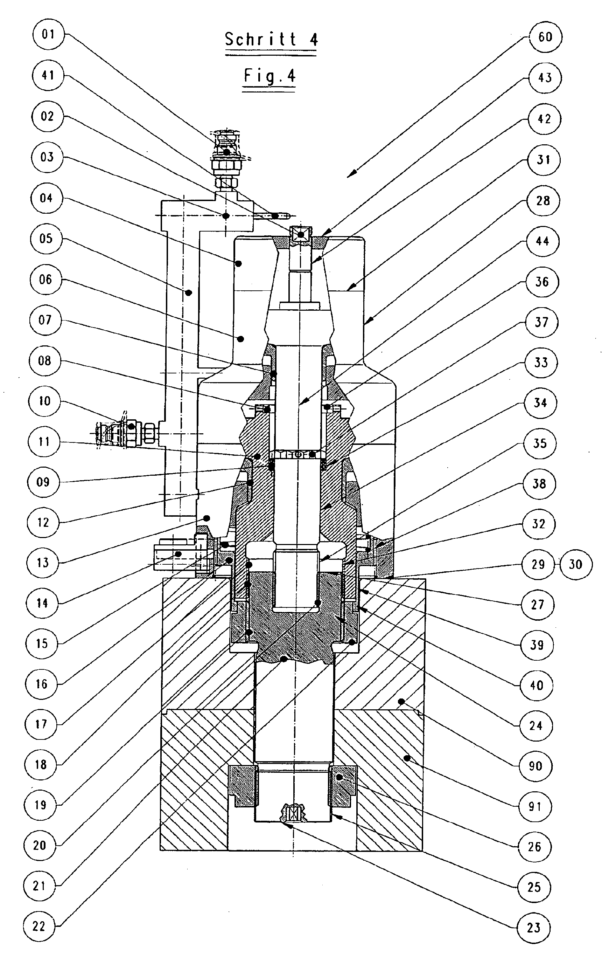

Im vierten Schritt wird dem ersten und dem zweiten Kolben 12, 7 gemeinsam Druckmittel zugeführt, sodass diese sich axial in die von der Stützfläche 30 abgewandte Richtung verschieben und dabei die äußere und die innere Wechselbuchse 11, 2 mitnehmen. Die Gesamt-Vorspannkraft wird dadurch auf das Innengewinde 20 und das Außengewinde 18 des Bolzenendes aufgeteilt. Entsprechend der aufgebrachten Gesamt-Vorspannkraft dehnt sich der Schraubenbolzen 21 (Figur 4).

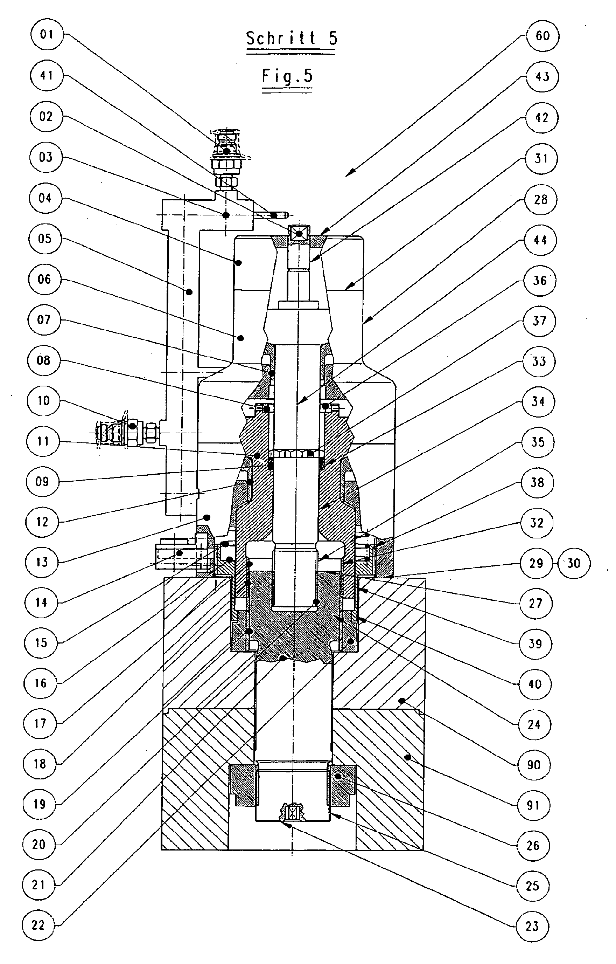

Bei Erreichen der Soll-Dehnung bzw. der Soll-Gesamt-Vorspannkraft wird die Mutter 22 am Bolzenende 24 bis zur Anlage an dem Maschinenteil 90 mit Hilfe der Drehhülse 16 beigedreht (Figur 5).

Anschließend wird die Schraubenbolzen-Spannvorrichtung 60 entlastet, indem dass Druckmittel wieder abgeleitet wird. Die innere Wechselbuchse 2 kann aus dem Bolzenende 24 herausgeschraubt werden und wird durch ihre Federvorspannung 9 wieder in ihre Ausgangsposition gedrückt. Anschließend wird die äußere Wechselbuchse 11 vom Bolzenende 24 abgeschraubt. Durch eine Federvorspannung wird auch die äußere Wechselbuchse 11 wieder in ihre Ausgangstellung gedrückt. Die Schraubenbolzen-Spannvorrichtung 60 kann entfernt werden.

## Patentansprüche

1. Schraubverbindung mit einem Schraubenbolzen (21), der durch Durchgangsbohrungen miteinander zu verspannender Maschinenteile (90, 91) hindurchgeführt ist und einen Bolzenkopf (23), der an einer Seite der Maschinenteile (91) abgestützt ist, und ein Bolzenende (24) aufweist, das zum Verschrauben mit einer Schraubenbolzen-Spannvorrichtung (60) vorgesehen ist und ein Außengewinde (18) und mindestens ein sich von der Stirnseite (27) aus längs der Bolzenachse erstreckendes Innengewinde (20) aufweist,
**dadurch gekennzeichnet, dass**
der Außendurchmesser des Bolzenendes (24) größer ist als der Durchmesser der Durchgangsbohrungen.

2. Schraubverbindung nach Anspruch 1, **dadurch gekennzeichnet, dass** das Bolzenende (24) nur ein Innengewinde (20) aufweist und dieses koaxial zum Außengewinde (18) verläuft.

3. Schraubverbindung nach Anspruch 2, **dadurch gekennzeichnet, dass** das Innengewinde (20) und das Außengewinde (18) gleichdrehend ausgebildet und so aufeinander abgestimmt sind, dass eine Schraubenbolzen-Spannvorrichtung (60), in der beide Gegengewinde ausgebildet und einstückig miteinander verbunden sind, gleichzeitig mit dem Innengewinde (20) und mit dem Außengewinde (18) des Bolzenendes (24) verschraubbar ist.

4. Hydraulische Schraubenbolzen-Spannvorrichtung zum Spannen des Schraubenbolzens (21) einer Schraubverbindung nach einem der Ansprüche 1 bis 3, mit
- einem Zylinder (28) mit einer Zylinderachse (44), der an einer ersten Stirnseite (29) eine Stützfläche (30) zum Abstützen auf den Maschinenteilen (90) aufweist,
- einer äußeren Wechselbuchse (11), die in dem Zylinder (28) relativ zu diesem axial verschieblich angeordnet ist und einen ersten Abschnitt (32) mit einem Innengewinde (17) zum Aufschrauben auf das Außengewinde (18) des Bolzenendes (24) und einen zweiten Abschnitt (33) mit einer axialen Durchgangsbohrung (34) aufweist, die in den ersten Abschnitt (32) mündet,
- einer inneren Wechselbuchse (2), die den Zylinder (28) und die Durchgangsbohrung (34) der äußeren Wechselbuchse (11) durchläuft und gegenüber diesen drehbar und axial verschiebbar ist und an einem ersten Ende ein Außengewinde (35) aufweist, das mit dem Innengewinde (20) des Bolzenendes (24) verschraubbar ist,
- einem ersten Kolben (12), der mit der äußeren Wechselbuchse (11) fest verbunden ist und in dem Zylinder (28) durch Druckmittel in die von der Stützfläche (30) abgewandte Richtung axial verschiebbar ist, wobei der Zylinder (28) eine erste Druckmittelzufuhr aufweist,
- einem zweiten Kolben (7), der mit der inneren Wechselbuchse (2) fest verbunden ist und in dem Zylinder (28) durch Druckmittel in die von der Stützfläche (30) abgewandte Richtung axial verschiebbar ist, wobei der Zylinder (28) eine zweite Druckmittelzufuhr aufweist,
- wobei das Größenverhältnis der wirksamen Kolbenflächen des ersten und des zweiten Kolbens (12, 7) zueinander dem Größenverhältnis zwischen den von der äußeren und der inneren Wechselbuchse (11, 2) zu übertragenden Anteilen an der Gesamt-Vorspannkraft entspricht,
- einem Druckmittelanschluss (5), der mit der ersten und mit der zweiten Druckmittelzufuhr in Strömungsverbindung steht.

5. Schraubenbolzen-Spannvorrichtung nach Anspruch 4, **dadurch gekennzeichnet, dass** die innere Wechselbuchse (2) gegenüber der äußeren Wechselbuchse (11) in die von der Stützfläche (30) abgewandte Richtung federvorgespannt ist.

6. Schraubenbolzen-Spannvorrichtung nach Anspruch 5, **dadurch gekennzeichnet, dass** das zweite Ende der inneren Wechselbuchse (2) im entspannten Zustand der Feder (9) über einen Deckel (4) der Schraubenbolzen-Spannvorrichtung (60), der an der anderen, zweiten Stirnseite (31) des Zylinders (28) angebracht ist, um eine vorgegebene Länge übersteht, wobei der Federweg so groß ist, dass die innere Wechselbuchse (2) vor dem Einschrauben in das Bolzenende (24) um ein vorgegebenes Maß verschiebbar ist.

7. Schraubenbolzen-Spannvorrichtung nach Anspruch 6, **dadurch gekennzeichnet, dass** die Überstandslänge gleich der Summe aus dem lichten Abstand zwischen der inneren Wechselbuchse (2) und dem Bolzenende (24) im verschraubten Zustand der äußeren Wechselbuchse (11) und der Mindesteinschraubtiefe der inneren Wechselbuchse (2) in das Innengewinde (20) des Bolzenendes (24) ist.

8. Schraubenbolzen-Spannvorrichtung nach Anspruch 6 oder 7, **gekennzeichnet durch** ein hydraulisches Ventil (3), das von einer ersten Ventilstellung, in der es die Versorgung der Druckmittelzufuhren mit Druckmittel sperrt, in eine zweite Ventilstellung, in der es diese Versorgung freigibt, und zurück **durch** ein Stellelement (41) überführbar ist, das in vorgegebenen Positionen der inneren Wechselbuchse (2) **durch** diese betätigbar ist.

9. Schraubenbolzen-Spannvorrichtung nach den Ansprüchen 7 und 8, **dadurch gekennzeichnet, dass** das Stellelement (41)
- sich parallel zur Stirnseite (43) des Deckels (4) in einem lichten Abstand zu diesem erstreckt, der geringer ist als die Überstandslänge gemäß Anspruch 7 und mindestens so groß ist wie die Soll-Dehnungslänge des Schraubenbolzens (21),
- zur inneren Wechselbuchse (2) hin federvorgespannt ist,
- von der inneren Wechselbuchse (2) entgegen der Federkraft verschiebbar ist, wenn der Überstand (42) größer ist als der lichte Abstand, und
- im verschobenen Zustand das Ventil (3) in die erste Ventilstellung und im nicht verschobenen Zustand in die zweite Ventilstellung überführt.

10. Hydraulische Schraubenbolzen-Spannvorrichtung zum Spannen des Schraubenbolzens einer Schraubverbindung nach Anspruch 3, mit
- einem Zylinder mit einer Zylinderachse, der an einer ersten Stirnseite eine Stützfläche zum Abstützen auf den Maschinenteilen aufweist,
- einer Wechselbuchse, die in dem Zylinder relativ zu diesem axial verschieblich angeordnet ist und ein Innengewinde zum Aufschrauben auf das Außengewinde des Bolzenendes sowie einen mit dem Innengewinde einstückig verbundenen zentralen Stift mit einem Außengewinde aufweist, das in das Innengewinde des Bolzenendes einschraubbar ist, wobei das Innengewinde und das Außengewinde gleichdrehend ausgebildet und so aufeinander abgestimmt sind, dass die Wechselbuchse gleichzeitig mit dem Außengewinde und dem Innengewinde des Bolzenendes verschraubbar ist,
- einem Kolben, der mit der Wechselbuchse fest verbunden ist und in dem Zylinder durch Druckmittel in die von der Stützfläche abgewandte Richtung axial verschiebbar ist, wobei der Zylinder eine Druckmittelzufuhr aufweist, und
- einem Druckmittelanschluss, der mit der Druckmittelzufuhr in Strömungsverbindung steht.

## Claims

1. A screw connection with a screw bolt (21) which is guided through through bores of machine parts (90, 91) to be clamped to each other and includes a bolt head (23), which is supported on one side of the machine parts (91), and a bolt end (24) which is provided for being screwed to a screw bolt tensioning device (60) and includes an external thread (18) and at least one internal thread (20) extending from the end face (27) along the bolt axis,
**characterized in that**
the external diameter of the bolt end (24) is greater than the diameter of the through bores.

2. The screw connection according to claim 1, **characterized in that** the bolt end (24) includes only one internal thread (20) and the same extends coaxially to the external thread (18).

3. The screw connection according to claim 2, **characterized in that** the internal thread (20) and the external thread (18) are formed to rotate in the same direction and are adjusted to each other such that a screw bolt tensioning device (60), in which both counter-threads are formed and are integrally connected with each other, can be screwed both to the internal thread (20) and to the external thread (18) of the bolt end (24) at the same time.

4. A hydraulic screw bolt tensioning device for tensioning the screw bolt (21) of a screw connection according to any of claims 1 to 3, comprising
- a cylinder (28) with a cylinder axis (44), which on a first end face (29) has a supporting surface (30) for supporting on the machine parts (90),
- an outer exchange bushing (11) which is arranged in the cylinder (28) so as to be axially shiftable relative to the same and includes a first portion (32) with an internal thread (17) for screwing onto the external thread (18) of the bolt end (24) and a second portion (33) with an axial through bore (34) which opens into the first portion (32),
- an inner exchange bushing (2) which runs through the cylinder (28) and the through bore (34) of the outer exchange bushing (11) and is rotatable and axially shiftable with respect to the same and at a first end has an external thread (35) which can be screwed to the internal thread (20) of the bolt end (24),
- a first piston (12) which is firmly connected with the outer exchange bushing (11) and in the cylinder (28) is axially shiftable in the direction facing away from the supporting surface (30) by pressure media, wherein the cylinder (28) includes a first pressure medium supply,
- a second piston (7) which is firmly connected with the inner exchange bushing (2) and in the cylinder (28) is axially shiftable in the direction facing away from the supporting surface (30) by pressure media, wherein the cylinder (28) includes a second pressure medium supply,
- wherein the size ratio of the effective piston surfaces of the first and the second piston (12, 7) relative to each other corresponds to the size ratio between the fractions of the entire biasing force to be transmitted by the outer and the inner exchange bushing (11, 2),
- a pressure medium port (5) which is in flow connection with the first and with the second pressure medium supply.

5. The screw bolt tensioning device according to claim 4, **characterized in that** the inner exchange bushing (2) is spring-biased with respect to the outer exchange bushing (11) in the direction facing away from the supporting surface (30).

6. The screw bolt tensioning device according to claim 5, **characterized in that** in the relaxed state of the spring (9) the second end of the inner exchange bushing (2) protrudes beyond a lid (4) of the screw bolt tensioning device (60), which is mounted on the other, second end face (31) of the cylinder (28), by a predetermined length, wherein the spring travel is so large that the inner exchange bushing (2) is shiftable by a predetermined extent before being screwed into the bolt end (24).

7. The screw bolt tensioning device according to claim 6, **characterized in that** the protrusion length is equal to the sum of the clear distance between the inner exchange bushing (2) and the bolt end (24) in the screwed state of the outer exchange bushing (11) and the minimum screw-in depth of the inner exchange bushing (2) into the internal thread (20) of the bolt end (24).

8. The screw bolt tensioning device according to claim 6 or 7, **characterized by** a hydraulic valve (3) which can be transferred from a first valve position, in which it blocks the provision of the pressure medium supplies with pressure medium, into a second valve position, in which it enables this provision, and back by an adjusting element (41) which in predetermined positions of the inner exchange bushing (2) can be actuated by the same.

9. The screw bolt tensioning device according to claims 7 and 8, **characterized in that** the adjusting element (41)
- extends parallel to the end face (43) of the lid (4) at a clear distance to the same, which is smaller than the protrusion length according to claim 7 and at least as large as the specified strain length of the screw bolt (21),
- is spring-biased towards the inner exchange bushing (2),
- is shiftable by the inner exchange bushing (2) against the spring force, when the protrusion (42) is greater than the clear distance, and
- in the shifted state transfers the valve (3) into the first valve position and in the non-shifted state transfers said valve into the second valve position.

10. A hydraulic screw bolt tensioning device for tensioning the screw bolt of a screw connection according to claim 3, comprising
- a cylinder with a cylinder axis, which on a first end face has a supporting surface for supporting on the machine parts,
- an exchange bushing which is arranged in the cylinder so as to be axially shiftable relative to the same and includes an internal thread for screwing onto the external thread of the bolt end as well as a central pin integrally connected with the internal thread, which pin has an external thread which can be screwed into the internal thread of the bolt end, wherein the internal thread and the external thread are formed to rotate in the same direction and are adjusted to each other such that the exchange bushing can be screwed both to the external thread and to the internal thread of the bolt end at the same time,
- a piston which is firmly connected with the exchange bushing and in the cylinder is axially shiftable by pressure media in the direction facing away from the supporting surface, wherein the cylinder includes a pressure medium supply, and
- a pressure medium port which is in flow connection with the pressure medium supply.

## Revendications

1. Liaison à vis comprenant un boulon-vis (21), qui est passé à travers des perçages traversants de parties de machine (90, 91) à serrer l'une avec l'autre et comprend une tête de boulon (23), qui s'appuie sur un côté des parties de machine (91), et une extrémité de boulon (24), qui est prévue pour le vissage avec un dispositif de serrage (60) de boulon et comporte un filetage (18) et au moins un taraudage (20) qui s'étend en partant de la face frontale (27) le long de l'axe du boulon,
**caractérisée en ce que** le diamètre extérieur de l'extrémité de boulon (24) est plus grand que le diamètre des perçages traversants.

2. Liaison à vis selon la revendication 1, **caractérisée en ce que** l'extrémité de boulon (24) comporte seulement un taraudage (20) et **en ce que** celui-ci s'étend coaxialement au filetage (18).

3. Liaison à vis selon la revendication 2, **caractérisée en ce que** le taraudage (20) et le filetage (18) sont réalisés dans le même sens de rotation et sont accordés l'un à l'autre de telle façon qu'un dispositif de serrage (60) de boulon, dans lequel les deux pas de vis antagonistes sont réalisés et sont reliés d'un seul tenant l'un à l'autre, est susceptible d'être vissé simultanément avec le taraudage (20) et avec le filetage (18) de l'extrémité de boulon (24).

4. Dispositif de serrage hydraulique de boulon pour serrer le boulon (21) d'une liaison à vis selon l'une des revendications 1 à 3, comprenant
- un vérin (28) avec un axe de vérin (44) et qui comporte sur une première face frontale (29) une surface d'appui (30) pour s'appuyer sur les parties de machine (90),
- une douille interchangeable extérieure (11), qui est agencée dans le vérin (28) en déplacement axial par rapport à celui-ci et qui comprend un premier tronçon (32) avec un taraudage (17) pour être vissée sur le filetage (18) de l'extrémité de boulon (24) et un second tronçon (33) avec un perçage traversant (34) qui débouche dans le premier tronçon (32),
- une douille interchangeable intérieure (2), qui passe à travers le vérin (28) et le perçage traversant (34) de la douille interchangeable extérieure (11), et qui est capable de déplacement en rotation et en translation axiale par rapport à celle-ci, et qui comprend à une première extrémité un filetage (35) qui peut être vissé avec le taraudage (20) de l'extrémité de boulon (24),
- un premier piston (12), qui est relié fermement avec la douille interchangeable extérieure (11) et qui est déplaçable en translation axiale dans le vérin (28) à l'aide d'un agent sous pression dans la direction détournée de la surface d'appui (30), et le vérin (28) comporte une première admission d'agent sous pression,
- un second piston (7), qui est relié fermement avec la douille interchangeable intérieure (2) et qui est déplaçable en translation axiale dans le vérin (28) à l'aide d'un agent sous pression dans la direction détournée de la surface d'appui (30), et le vérin (28) comporte une seconde admission d'agent sous pression,
- dans lequel le rapport de grandeur des surfaces efficaces du premier et du second piston (12, 7) l'une par rapport à l'autre correspond au rapport de grandeur entre les parts, de la force de précontrainte totale, à transmettre depuis la douille interchangeable extérieure (11) et la douille interchangeable intérieure (2),
- un raccord d'agent sous pression (5) qui est en liaison d'écoulement avec la première et la seconde admission d'agent sous pression.

5. Dispositif de serrage de boulon selon la revendication 4, **caractérisé en ce que** la douille interchangeable intérieure (2) est précontrainte par un ressort par rapport à la douille interchangeable extérieure (11) dans la direction détournée de la surface d'appui (30).

6. Dispositif de serrage de boulon selon la revendication 5, **caractérisé en ce que** la seconde extrémité de la douille interchangeable intérieure (2), dans l'état détendu du ressort (9), dépasse d'une longueur prédéterminée d'un couvercle (4) du dispositif de serrage de boulon (60), qui est rapporté sur l'autre seconde face frontale (31) du vérin (28), et la course du ressort est si importante que la douille interchangeable intérieure (2) est déplaçable d'une distance prédéterminée avant le vissage dans l'extrémité de boulon (24).

7. Dispositif de serrage de boulon selon la revendication 6, **caractérisé en ce que** la longueur du dépassement est égale à la somme de la distance libre entre la douille interchangeable intérieure (2) et l'extrémité de boulon (24) dans l'état vissé de la douille interchangeable extérieure (11), et de la profondeur de vissage minimum de la douille interchangeable intérieure (2) dans le taraudage (20) de l'extrémité de boulon (24).

8. Dispositif de serrage de boulon selon la revendication 6 ou 7, **caractérisé par** une valve hydraulique (3), laquelle est susceptible d'être transférée depuis une première position de valve dans laquelle elle bloque l'alimentation en agent sous pression des admissions d'agent sous pression, jusque dans une seconde position de valve dans laquelle elle libère cette alimentation, et en retour, au moyen d'un élément de positionnement (41), lequel est susceptible d'être actionné par la douille interchangeable intérieure (2) dans des positions prédéterminées de celle-ci.

9. Dispositif de serrage de boulon selon les revendications 7 et 8, **caractérisé en ce que** l'élément de positionnement (41)
- s'étend parallèlement à la face frontale (43) du couvercle (4) à une distance libre de celui-ci qui est plus faible que la longueur de dépassement selon la revendication 7, et au moins aussi grande que la longueur d'allongement de consigne du boulon-vis (21),
- est précontraint par un ressort en direction de la douille interchangeable intérieure (2),
- est déplaçable en translation par la douille interchangeable intérieure (2) en sens opposé à la force du ressort quand le dépassement (42) est plus grand que la distance libre, et
- dans l'état déplacé en translation, il transfère la valve (3) dans la première position de valve, et dans l'état non déplacé en translation, il la transfère dans la seconde position de valve.

10. Dispositif de serrage hydraulique de boulon pour serrer le boulon d'une liaison à vis selon la revendication 3, comprenant
- un vérin avec un axe de vérin, qui comporte sur une première face frontale une surface d'appui pour s'appuyer sur les parties de machine,
- une douille interchangeable, qui est agencée dans le vérin avec possibilité de translation axiale par rapport à celui-ci, et qui comporte un taraudage pour être vissée sur le filetage de l'extrémité de boulon, ainsi qu'une tige centrale reliée d'une seule pièce avec le taraudage et présentant un filetage, susceptible d'être vissée dans le taraudage de l'extrémité de boulon, dans lequel le taraudage et le filetage sont réalisés dans le même sens de rotation et sont accordés l'un à l'autre de telle façon que la douille interchangeable est susceptible d'être vissée simultanément avec le filetage et avec le taraudage de l'extrémité de boulon,
- un piston, qui est relié fermement avec la douille interchangeable et qui est susceptible d'être déplacé axialement dans le vérin par un agent sous pression dans la direction détournée de la surface d'appui, le vérin comprenant une admission en agent sous pression, et
- un raccord d'agent sous pression, qui est en liaison d'écoulement avec l'admission d'agent sous pression.
